# FASCICULE DE BREVET EUROPEEN

(11) **EP 0 694 887 B1**
(45) Date de publication et mention de la délivrance du brevet: **13.10.1999**
(21) Numéro de dépôt: 95401618.4
(22) Date de dépôt: 05.07.1995
(51) Int. Cl.: G07C 9/00, G06K 7/10

(54) **Système de communication entre une station de base et un transpondeur passif**
Kommunikationssystem zwischen einer Basisstation und einem passiven Transponder
Communication system between a base station and a passive transponder

(30) Priorité: 27.07.1994 FR 9409544
(43) Date de publication de la demande: 31.01.1996
(73) Titulaire: CSEM Centre Suisse d'Electronique et de Microtechnique S.A., 2007 Neuchâtel (CH)
(72) Inventeur: Von Kaenel, Vincent, c/o, F-75116 Paris (FR); Dijkstra, Evert, c/o, F-75116 Paris (FR)
(74) Mandataire: Ballot, Paul Denis Jacques

(56) Documents cités:
- EP-A- 0 426 163
- EP-A- 0 441 237
- EP-A- 0 460 885
- EP-A- 0 553 713
- GB-A- 2 202 108

## Description

La présente invention concerne un système de communication entre une station de base et un transpondeur passif.

Dans la suite de ce mémoire, on entendra par "transpondeur passif' un transpondeur dépourvu de source d'alimentation spécifique, externe ou interne, et qui doit donc produire l'énergie nécessaire à son fonctionnement par un traitement approprié des signaux électriques provenant de la station de base.

L'invention trouve une application particulièrement avantageuse dans le domaine du contrôle automatisé d'accès de locaux, mais elle peut également être utilisée pour réaliser des étiquettes électroniques, ou encore pour identifier des personnes ou des objets, notamment dans le contrôle de processus de chaînes de production.

On connaît de la demande de brevet européen n° 0 260 221, par exemple, un système de communication entre une station de base et des transpondeurs passifs, mettant en oeuvre deux canaux à la même fréquence. Un premier desdits canaux est utilisé pour émettre un signal de référence de la station de base aux transpondeurs, tandis qu'un deuxième canal permet l'émission vers les transpondeurs d'un signal contenant, sous forme codée, le message à transmettre auxdits transpondeurs. Ce codage peut être réalisé de manière binaire en déphasant de ± π le signal du deuxième canal par rapport au signal de référence du premier canal.

Le deuxième canal est également utilisé pour l'émission, depuis un transpondeur vers la station de base, d'un signal représentatif d'informations à transmettre à la station de base en réponse au message reçu.

Cette configuration permet de réduire de façon très sensible la capacité de filtrage de la tension d'alimentation des transducteurs passifs, celle-ci étant obtenue par redressement double-alternance biphasé des signaux provenant des deux canaux. Il en résulte une diminution correspondante de la surface du circuit intégré sur lesquels sont réalisés les transpondeurs.

Il faut d'autre part souligner que, dans un tel système de communication, le décodage est très simple puisqu'il ne nécessite qu'une bascule D, également peu coûteuse en surface de circuit, et un circuit de mise en forme des signaux d'horloge.

La séparation des deux canaux est faite de manière physique, c'est-à-dire par une faible distance entre les antennes d'émission et de réception d'un même canal, et par une distance maximum entre les antennes de canaux différents.

Toutefois, ce système de communication connu présente l'inconvénient d'une distance de communication très limitée, inférieure au centimètre pour des antennes au format d'une carte bancaire, conséquence du couplage parasite pouvant se produire entre les deux canaux.

C'est pourquoi, un but à atteindre par l'objet de la présente invention est de réaliser un système de communication du type de celui qui vient d'être décrit en regard de l'état de la technique, système qui permettrait notamment d'augmenter la distance de communication entre station de base et transpondeurs.

Ce but est atteint, conformément à l'invention, par un système de communication entre une station de base et au moins un transpondeur passif, comprenant :
- un premier canal pour l'émission, de la station de base au transpondeur, d'un signal s1 de référence,
- un deuxième canal, d'une part, pour l'émission, de la station de base au transpondeur, d'un signal s2 représentatif d'un message à transmettre au transpondeur, codé par rapport audit signal s1 de référence, et, d'autre part, pour l'émission, du transpondeur à la station de base, d'un signal s'2 représentatif d'informations à transmettre à la station de base,
remarquable en ce que le signal s1 de référence du premier canal et les signaux s2 et s'2 du deuxième canal ont respectivement des fréquences f1 et f2 distinctes et synchronisées.

Ainsi, les fréquences f1 et f2 respectives des signaux circulant sur l'un et l'autre des deux canaux étant différentes, il est possible d'obtenir une séparation en fréquence desdits canaux, et non plus une simple séparation physique, avec l'avantage de pouvoir accroître la distance de communication entre les antennes d'émission et de réception d'un même canal, puisqu'aucun couplage parasite entre canaux ne peut plus se produire, lorsqu'un filtrage adéquat est effectué.

Selon un mode de réalisation particulier de l'invention, la fréquence f2 des signaux s2, s'2 du deuxième canal est dans un rapport 1/2k avec la fréquence f1 du signal s1 de référence du premier canal, k étant un nombre entier non nul.

De manière avantageuse, il est également prévu que le codage dudit signal s2, représentatif d'un message à transmettre au transpondeur, est réalisé en mode binaire par une différence de phase de plus ou moins un quart de période du signal s1 de référence entre le signal s2 et ledit signal s1 de référence. On conserve, de la sorte, l'avantage d'un décodage très simple au niveau du transpondeur par une bascule D, en y ajoutant celui d'un redressement bi-alternance biphasé qui ne fait apparaître aucun passage par zéro de la tension d'alimentation, d'où une capacité de filtrage encore réduite et une surface correspondante de circuit plus faible.

La description qui va suivre en regard des dessins annexés, donnés à titre d'exemples non limitatifs, fera bien comprendre en quoi consiste l'invention et comment elle peut être réalisée.

La figure 1a est un schéma fonctionnel d'une station de base d'un système de communication selon l'invention.

La figure 1b est un schéma fonctionnel d'un transpondeur passif d'un système de communication selon l'invention.

La figure 2 est un diagramme donnant en fonction du temps les signaux provenant de la station de base de la figure 1a selon les deux canaux de communication, après redressement double alternance par le transpondeur de la figure 1b.

La figure 3 est un chronogramme, simplifié par des signaux carrés, des signaux produits en divers noeuds de la station de base de la figure 1a et du transpondeur de la figure 1b.

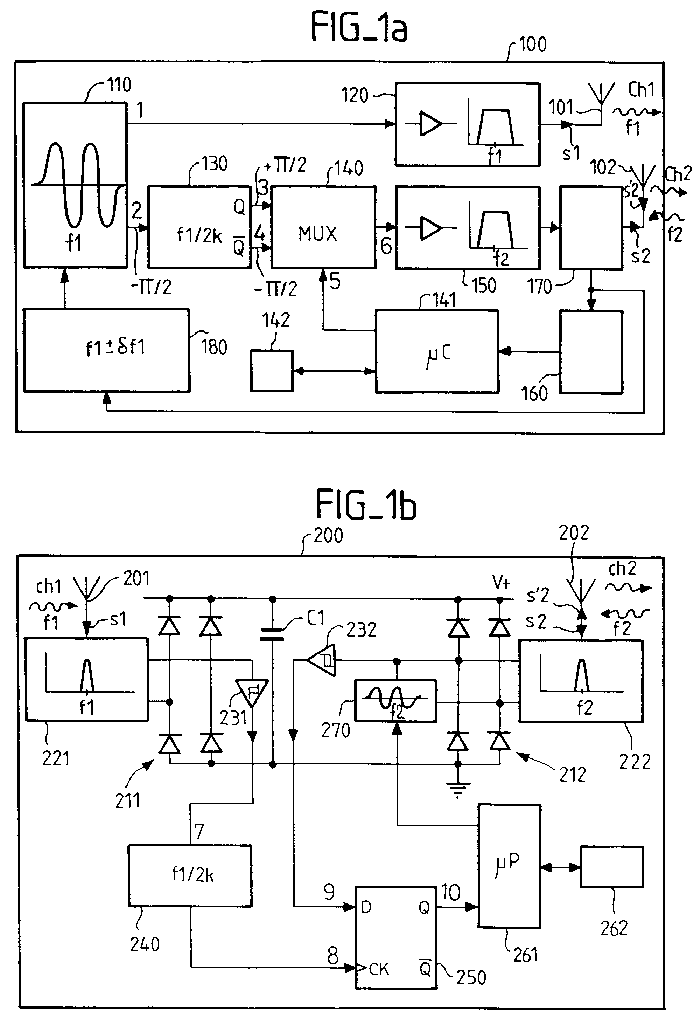

Les figures 1a et 1b montrent respectivement une station 100 de base et un transducteur passif 200 d'un système de communication comprenant un premier canal Ch1 de communication destiné à émettre un signal s1 de référence à une fréquence f1 depuis une antenne 101 d'émission de la station 100 de base jusqu'à une antenne 201 de réception du transpondeur 200.

Le signal s1 de référence est formé à partir d'un générateur 110 de signaux sinusoïdaux, ou éventuellement carrés, à la fréquence f1, dont la sortie est appliquée à une unité 120 d'amplification et de filtrage.

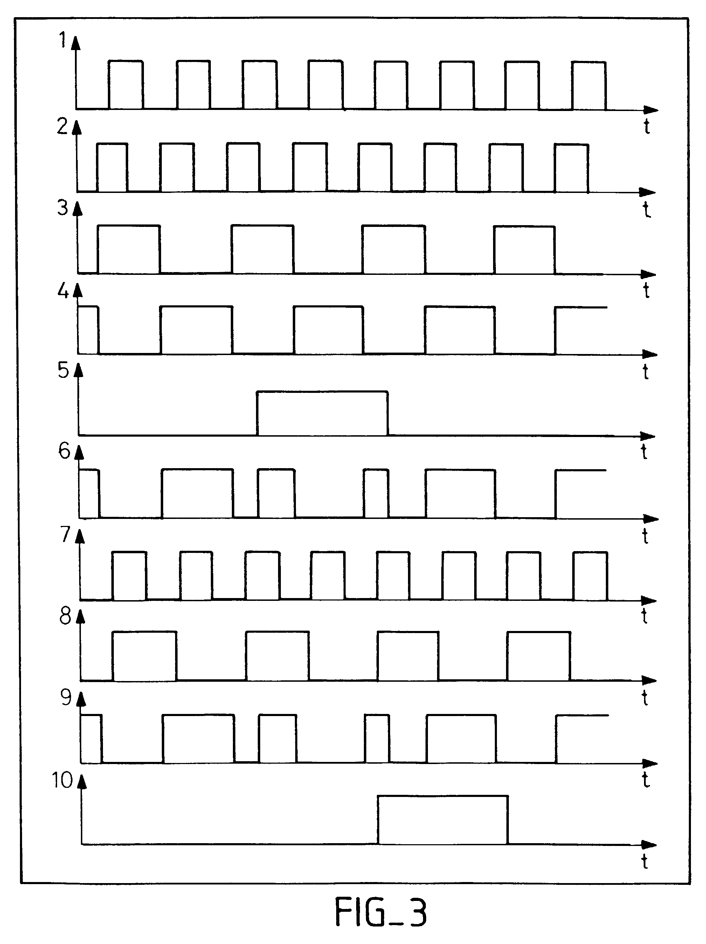

Le chronogramme de la figure 3 donne un exemple, sous forme de signaux carrés, du signal au noeud référencé 1 de la station 100 de base.

Sur un deuxième canal Ch2 de communication entre une antenne 102 de la station de base et une antenne 202 du transpondeur, circule un signal s2 représentatif d'un message à transmettre de la station 100 de base au transpondeur 200. Ledit message peut contenir des demandes d'informations portant notamment sur l'identité du transpondeur.

Le signal s2 émis à une fréquence f2 par la station de base sur ledit deuxième canal Ch2 est codé en mode binaire sur la différence de phase entre le signal s2 et le signal s1 de référence. On donnera plus loin un exemple de réalisation d'un tel codage, dont l'avantage est de permettre un décodage très simple.

Le deuxième canal Ch2 de communication est également utilisé en sens inverse pour transmettre, du transpondeur 200 à la station 100 de base, un signal s'2 de même fréquence f2 que le signal s2, représentatif des informations que doit fournir le transpondeur en réponse au message reçu de la station de base via le signal s2. Le mode d'émission par le transpondeur 100 du signal s'2 sera décrit en détail plus loin.

Avantageusement, il est prévu que les deux fréquences f1 et f2 du signal s1 de référence, d'une part, et des signaux s2, s'2, d'autre part, sont des fréquences distinctes synchronisées. Comme cela a été rappelé plus haut, cette disposition permet d'accroître la distance de communication entre la station 100 de base et le transpondeur passif 200 associé, en évitant le couplage parasite croisé entre les deux canaux Ch1 et Ch2, comme cela se produit lorsque les fréquences utilisées sur l'un et l'autre des canaux sont identiques.

Plus particulièrement, la fréquence f2 des signaux s2 et s'2 est choisie de manière à présenter avec la fréquence f1 du signal s1 de référence un rapport 1/2k, k étant un nombre entier non nul.

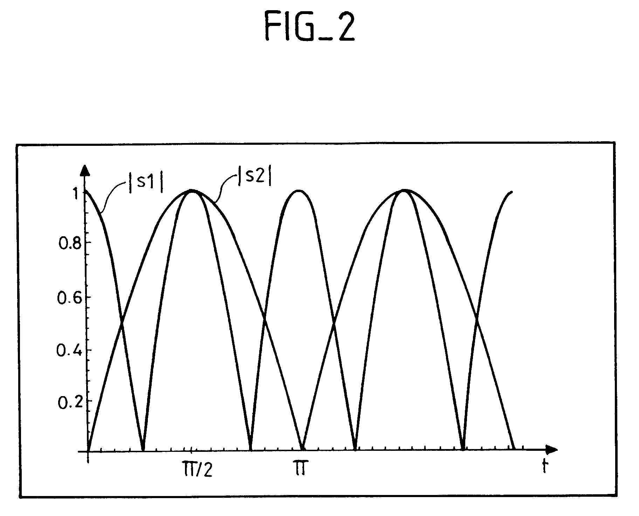

Dans ce cas, la différence de phase entre le signal s1 de référence et entre le signal s2 contenant le message à transmettre au transpondeur 200 est prise égale à plus ou moins le quart de la période du signal de référence, soit ± π /2 en terme de phase angulaire du signal s1. On obtient alors, après redressement double alternance par les ponts 211,212 de diodes du transpondeur passif 200, des tensions |s1| et |s2|, telles que montrées sur la figure 2 pour k=1, qui ne présentent aucun passage par zéro commun.

La tension biphasée ainsi redressée ne passant pas par zéro, il est possible d'envisager de réduire la valeur de la capacité C1 de filtrage ainsi que la surface du circuit correspondant. Après filtrage, la tension redressée fournit la tension V+ d'alimentation du transpondeur 200.

Le signal s2 déphasé de ± π/2 par rapport au signal s1 de référence est obtenu, comme l'indique la figure 1a, à partir d'un signal déphasé de - π/2, par exemple, fourni au noeud 2 de la station 100 de base par le générateur 110 à la fréquence f1. Ce signal, dont l'évolution au cours du temps est donné sur le chronogramme de la figure 3, est appliqué à un diviseur 130 de fréquence par 2k et déphasé de 0 ou π pour constituer aux noeuds 3 et 4 deux signaux à la fréquence f2 = f1/2k, présentant une différence de phase de ± π/2 par rapport au signal s1 de référence. La figure 3 donne une représentation de ces deux signaux dans le cas ou k = 1.

Un multiplexeur 140 reçoit, d'une part, les deux signaux provenant du diviseur 130 de fréquence, et, d'autre part, sur l'entrée référencée 5, les informations numériques formant le message à transmettre au transpondeur 200.

Ces informations sont gérées par un microcontrôleur 141 en liaison avec une mémoire 142 contenant notamment le numéro représentatif de l'identité du transpondeur, et un détecteur 160 des informations reçues par la station 100 de base en provenance du transpondeur 200 via le signal s'2 circulant sur le deuxième canal Ch2.

On a montré sur la figure 3 la forme du signal à la sortie 6 du multiplexeur 140 en réponse à l'information binaire appliquée à l'entrée 5.

Le signal issu du multiplexeur 140 est ensuite traité par une deuxième unité 150 d'amplification et de filtrage pour constituer le signal s2 à destination du transpondeur par l'intermédiaire du deuxième canal Ch2.

Le décodage par le transpondeur 200 du message provenant de la station 100 de base est effectué en appliquant à une entrée 7 d'un diviseur 240 de fréquence par 2k le signal s1 de référence après qu'il ait été filtré par un filtre 221 d'entrée accordé sur la fréquence f1 et régénéré par un premier "trigger" 231 de Schmitt. Parallèlement, le signal s2 reçu à l'antenne 202 du transpondeur 200 est également filtré par un filtre 222 accordé sur la fréquence f2, puis régénéré par un deuxième "trigger" 232 de Schmitt.

Les signaux délivrés respectivement par le diviseur 240 de fréquence et le deuxième "trigger" 232 de Schmitt sont appliqués aux entrées 8 et 9 d'une bascule D 250 pour fournir sur la sortie 10 de ladite bascule D le message émis par la station 100 de base. La figure 3 donne l'évolution au cours du temps des signaux aux noeuds 8,9 et 10 du transpondeur 200. Les informations contenues dans ledit message sont alors traitées par un microprocesseur 261 en liaison avec une mémoire 262.

En réalité, le signal en sortie 10 de la bascule D 250 ne représente l'information numérique reçue qu'au signe près, en ce sens que dans ce dispositif, selon l'état initial du diviseur 240 par 2k, le signal reçu peut être inversé ou non. Ce problème est en pratique facilement résolu par un protocole de transmission adapté. On peut par exemple envoyer des bits 0 en début du message de la station de base vers le transpondeur, puis comparer les bits fournis par la bascule D 250. Si ces derniers ne sont pas des bits 0 il faut inverser le signe des bits reçus.

Les deux antennes 201 et 202 du transpondeur 200 sont accordées respectivement sur les fréquences f1 et f2 à l'aide de deux filtres 221 et 222 qui doivent être suffisamment sélectifs pour que les deux canaux Ch1 et Ch2 ne se mélangent pas. Dans la pratique, un facteur de qualité de 10 sera suffisant pour un rapport de fréquence de 1/2 (k=1).

Afin d'obtenir une indépendance du résultat par rapport aux valeurs absolues des composants des filtres 221 et 222, on peut utiliser des composants unitaires, tels qu'une bobine et une capacité en parallèle pour le filtre 221 à la fréquence f1, et une bobine identique et k capacités identiques en parallèle pour le filtre 222 à la fréquence f2. On réalise ainsi deux filtres ayant des fréquences de résonance dans un rapport sensiblement égal à 1/2k. Ce procédé est bien adapté à la technologie circuit intégré et conduit à une réduction du coût.

Toutefois, la valeur absolue des fréquences n'étant pas connue exactement, il est prévu un dispositif de contrôle automatique d'accord en fréquence entre la station 100 de base et le transpondeur 200. Conformément à la figure 1a, ce dispositif de contrôle automatique comprend un circuit 170 de mesure du courant reçu par la station 100 de base au niveau de l'antenne 102 du deuxième canal Ch2, et un circuit 180 de correction de la fréquence f1 du générateur 110, commandé par ledit circuit 170 de mesure de courant. L'accord en fréquence est ainsi réalisé sans avoir à modifier les caractéristiques des filtres 201 et 202 du transpondeur 200.

Cette mesure du courant à l'antenne 102 de la station 100 de base peut être aussi utilisée pour la réception des informations contenues dans le signal s'2 provenant du transpondeur 200, ledit signal s'2 étant obtenu par modulation de l'impédance dudit transpondeur vue de la station de base par l'intermédiaire des antennes 202 et 102.

Le modulateur 270 chargé de produire la modulation recherchée peut agir, soit par mise en court-circuit des bornes de l'antenne 202 de sortie du transpondeur 200, soit par décalage de la fréquence de résonance du filtre 222 de l'antenne 202 d'émission du transpondeur 200.

On remarquera que, dans le cas d'une modulation par mise en court-circuit de la sortie du transpondeur, le signal s2 à la fréquence f2 ne peut contribuer à l'alimentation du transpondeur lors des courts-circuits, ce qui ne remet pas en cause la réduction de la capacité de filtrage dans la mesure où l'alimentation par le signal s1 de référence sur le premier canal Ch1 reste en fonction.

## Revendications

1. Système de communication entre une station (100) de base et au moins un transpondeur passif (200), comprenant :
- un premier canal (Ch1) pour l'émission, de la station de base au transpondeur, d'un signal s1 de référence,
- un deuxième canal (Ch2), d'une part, pour l'émission, de la station de base au transpondeur, d'un signal s2 représentatif d'un message à transmettre au transpondeur (200), codé par rapport audit signal s1 de référence, et, d'autre part, pour l'émission, du transpondeur à la station de base, d'un signal s'2 représentatif d'informations à transmettre à la station (100) de base,
caractérisé en ce que le signal s1 de référence du premier canal (Ch1) et les signaux s2, s'2 du deuxième canal (Ch2) ont respectivement des fréquences f1 et f2 distinctes et synchronisées.

2. Système de communication selon la revendication 1, caractérisé en ce que la fréquence f2 des signaux s2, s'2 du deuxième canal (Ch2) est dans un rapport 1/2k avec la fréquence f1 du signal s1 de référence du premier canal (Ch1), k étant un nombre entier non nul.

3. Système de communication selon la revendication 2, caractérisé en ce que le codage dudit signal s2, représentatif d'un message à transmettre au transpondeur (200), est réalisé en mode binaire par une différence de phase de plus ou moins un quart de période du signal s1 de référence entre le signal s2 et ledit signal s1 de référence.

4. Système de communication selon l'une quelconque des revendications 1 à 3, caractérisé en ce que ledit signal s'2 émis par le transpondeur (200) est obtenu par modulation de l'impédance dudit transpondeur vue de la station (100) de base.

5. Système de communication selon la revendication 4, caractérisé en ce que ladite modulation d'impédance est réalisée par mise en court-circuit de la sortie du transpondeur (200).

6. Système de communication selon la revendication 4, caractérisé en ce que ladite modulation d'impédance est réalisée par décalage de la fréquence de résonance d'un filtre (222) de l'antenne (202) d'émission du transpondeur (200).

7. Système de communication selon l'une quelconque des revendications 2 à 6, caractérisé en ce que le décodage par le transpondeur (200) du message provenant de la station (100) de base est effectué par division par 2k de la fréquence f1 du signal s1 de référence, et par comparaison par une bascule D (250) dudit signal s1 de référence divisé en fréquence avec le signal s2 reçu par le transpondeur (200) sur le deuxième canal (Ch2).

8. Système de communication selon l'une quelconque des revendications 1 à 7, caractérisé en ce qu'il comporte un dispositif (170,180) de contrôle automatique d'accord en fréquence entre la station (100) de base et le transpondeur (200).

9. Système de communication selon la revendication 8, caractérisé en ce que ledit dispositif de contrôle automatique d'accord en fréquence comprend un circuit (170) de mesure du courant reçu par la station (100) de base par le deuxième canal (Ch2), et un circuit (180) de correction de la fréquence f1 du signal s1 de référence, commandé par ledit circuit (170) de mesure de courant.

## Patentansprüche

1. Kommunikationssystem zwischen einer Basisstation (100) und wenigstens einem passiven Transponder (200), mit folgenden Merkmalen:
ein erster Kanal (Ch1) für das Senden eines Bezugssignals sl von der Basisstation zu dem Transponder;
einen zweiten Kanal (Ch2) zum Senden eines Signals s2, das für eine zum Transponder (200) zu sendende Nachricht repräsentativ ist und in Bezug auf das Bezugssignal s1 codiert ist, von der Basisstation zu dem Transponder und zum Senden eines Signals s'2, das für zur Basisstation (100) übertragende Information repräsentativ ist, von dem Transponder zu der Basisstation,
dadurch gekennzeichnet, daß das Bezugssignal s1 des ersten Kanals (Ch1) und die Signale s2, s'2 des zweiten Kanals (Ch2) jeweils unterschiedliche und synchronisierte Frequenzen f1 und f2 haben.

2. Kommunikationssystem nach Anspruch 1, dadurch gekennzeichnet, daß die Frequenz f2 der Signale s2, s'2 des zweiten Kanals (Ch2) ein Verhältnis 1/2k zu der Frequenz f1 das Bezugssignal s1 des ersten Kanals (Ch1) aufweist, wobei k eine ganze Zahl ungleich 0 ist.

3. Kommunikationssystem nach Anspruch 2, dadurch gekennzeichnet, daß die Codierung des Signals s2, das repräsentativ für eine zu dem Transponder (200) zu übertragende Nachricht ist, in einem binären Modus durch eine Phasendifferenz von plus oder minus einer Viertelperiode des Bezugssignals sl zwischen dem Signal s2 und disem Bezugssignal sl realisiert ist.

4. Kommunikationssystem nach einem der Ansprüche 1 bis 3, dadurch gekennzeichnet, daß das von dem Transponder (200) gesendete Signal s'2 durch Modulation der Impedanz dieses Transponders erhalten wird, der von der Basisstation (100) gesehen wird.

5. Kommunikationssystem nach Anspruch 4, dadurch gekennzeichnet, daß die Impedanzmodulation durch Kurzschließen des Ausgangs des Transponders (200) realisiert wird.

6. Kommunikationssystem nach Anspruch 4, dadurch gekennzeichnet, daß die Impedanzmodulation durch Verschiebung der Resonanzfrequenz eines Filters (226) der Sendeantenne (202) des Transponders (200) realisiert wird.

7. Kommunikationssystem nach einem der Ansprüche 2 bis 6, dadurch gekennzeichnet, daß die Codierung der von der Basisstation (100) kommenden Nachricht durch den Transponder (200) durch Teilen der Frequenz f1 des Bezugssignals s1 durch 2k und durch Vergleichen dieses frequenzgeteilten Bezugssignals s1 mit dem von dem Transponder (200) auf dem zweiten Kanal (Ch2) empfangenen Signal s2 mit Hilfe eines D-Flip-Flops (205) erfolgt.

8. Kommunikationssystem nach einem der Ansprüche 1 bis 7, dadurch gekennzeichnet, daß es Mittel (170, 180) zum automatischen Steuern der Frequenzabstimmung zwischen der Basisstation (100) und dem Transponder (200) aufweist.

9. Kommunikationssystem nach Anspruch 8, dadurch gekennzeichnet, daß die Mittel zum automatischen Steuern der Frequenzabstimmung eine Schaltung (170) zum Messen des Stroms, der von der Basisstation (100) über den zweiten Kanal (Ch2) empfangen wird, und eine Schaltung (180) zum Korrigieren der Frequenz f1 des Bezugssignals s1 aufweist, die von der Strommeßschaltung (170) gesteuert wird.

## Claims

1. A system of communication between a base station (100) and at least one passive transponder (200) comprising:
- a first channel (Ch1) for transmitting a reference signal S1 from the base station to the transponder,
- a second channel (Ch2), on the one hand for transmitting from the base station to the transponder a signal s2 representative of a message to be transmitted to the transponder (200), coded in relation to said reference signal s1, and on the other for transmitting from the transponder to the base station a signal s'2 representative of data to be transmitted to the base station (100),
characterised in that the reference signal s1 of the first channel (Ch1) and the signals s2, s'2 of the second channel (Ch2) respectively have separate and synchronised frequencies f1 and f2.

2. A communication system as claimed in claim 1, characterised in that the frequency f2 of the signals s2, s'2 of the second channel (Ch2) is in a ratio of 1/2k to the frequency f1 of the reference signal s1 of the first channel (Ch1), k being a whole number that is not zero.

3. A communication system as claimed in claim 2, characterised in that the signal s2 representative of a message to be transmitted to the transponder (200) is coded in binary mode by a phase difference of more or less one quarter period of the reference signal s1 between the signal s2 and said reference signal s1.

4. A communication system as claimed in any one of claims 1 to 3, characterised in that said signal s'2 transmitted by the transponder (200) is obtained by modulating the impedance of said transponder seen from the base station (100).

5. A communication system as claimed in claim 4, characterised in that said impedance modulation is performed by shorting the output of the transponder (200).

6. A communication system as claimed in claim 4, characterised in that said impedance modulation is performed by shifting the resonance frequency of a filter (222) of the transmission antenna (202) of the transponder (200).

7. A communication system as claimed in any one of claims 2 to 6, characterised in that the message from the base station (100) is decoded by the transponder (200) by dividing the frequency f1 of the reference signal s1 by 2k and comparing said frequency-divided reference signal s1 with the signal s2 received by the transponder (200) on the second channel (Ch2) by means of a D flip-flop (250).

8. A communication system as claimed in any one of claims 1 to 7, characterised in that it has a device (170, 180) for automatically controlling the frequency tuning between the base station (100) and the transponder (200).

9. A communication system as claimed in claim 8, characterised in that said automatic frequency-tuning control device comprises a circuit (170) for measuring the current received by the base station (100) via the second channel (Ch2) and a circuit (180) for correcting the frequency f1 of the reference signal s1, controlled by said current measuring circuit (170).
